# EUROPÄISCHE PATENTANMELDUNG

(11) **EP 0 664 635 A2**
(43) Veröffentlichungstag der Anmeldung: **26.07.1995**
(21) Anmeldenummer: 95100539.6
(22) Anmeldetag: 17.01.1995
(51) Int. Cl.: H04M 3/50, H04M 11/00

(54) **Automatisches Bestellsystem in Kommunikations-Vermittlungsanlagen**

(30) Priorität: 20.01.1994 DE 4401518
(71) Anmelder: ROBERT BOSCH GMBH, 70442 Stuttgart (DE)
(72) Erfinder: Zinke, Joachim, Dr., D-61194 Niddatal (DE)

(57) **Zusammenfassung**

Der Bestellserver (BS) soll einem Benutzer mit einfachen Wähl- und Bedienungsvorgängen zugänglich sein und ihm eine Erleichterung und ein Zeitgewinn bei der Aufgabe von Bestellungen bringen.

An die Verbindung zu einem innerhalb eines Vermittlungssystems (VS) vorgesehenen Bestellserver (BS) ist ein Spracherkenner (SE) angeschaltet. Dieser erkennt aus den von einem Benutzer über ein anrufendes Anschlußorgan (AA) abgegebenen Sprachäußerungen einzelne Schlüsselwörter und reizt eine im Bestellserver (BS) befindliche Dialogsteuerung an. Die Dialogsteuerung steuert daraufhin einen Rufnummernspeicher (RNS) an, wobei eine dem erkannten Schlüsselwort entsprechende Rufnummer ausgelesen wird, die zum Aufbauen einer Verbindung zu einer diese Bestellung annehmenden Stelle dient. Der an diese Verbindung angeschaltete Spracherkenner (SE) kann aus der von der angerufenen Stelle kommenden Antwort ebenfalls Schlüsselwörter erkennen, woraufhin Kriterien gebildet werden, die eine Aussage darüber liefern, ob die Bestellung ordnungsgemäß angenommen worden ist oder nicht.

Die Aufgabe von verschiedenartigen Bestellungen ist mit einfachen Bedienungsvorgängen und durch sprachliche Äußerungen möglich, wobei der Bestellserver (BS) alle für die Kommunikation mit einer die Bestellung annehmenden Stelle erforderlichen Funktionen weitgehend automatisch ausführt.

## Beschreibung

Die Erfindung betrifft ein Verfahren zum Betreiben eines automatischen Bestellsystems in Kommunikations-Vermittlungsanlagen nach dem Oberbegriff des Patentanspruchs 1.

Aus der Deutschen Patentschrift DE 32 25 562 C2 ist ein Verfahren zur automatischen Auftragsannahme unter Verwendung einer Fernmelde-, insbesondere Fernsprechvermittlungsanlage bekannt. Dieses Verfahren beruht darauf, daß ein Auftraggeber eine dem Auftrag entsprechende vorbestimmte Rufnummer wählt, um eine Stelle zu erreichen, die den Auftrag automatisch entgegennimmt. Mit dieser vorbestimmten Rufnummer ist dann der Auftraggeber eindeutig identifiziert, so daß die Art des Auftrags und die Adresse des Auftraggebers automatisch registriert werden kann. Wenn dies geschehen ist, so erhält der Auftraggeber eine automatische sprachliche Bestätigung seines Auftrags.

Bei diesem Verfahren ist es notwendig, eine vorbestimmte mehrstellige Rufnummer für jede Auftragsart vorzusehen. Der Benutzer muß also mehrere Rufnummern kennen, wenn verschiedenartige Aufträge zu unterschiedlichen Stellen abgegeben werden sollen. Die Steuerung der Abgabe einer Bestellung erfolgt also ausschließlich durch das Wählen einer mehrstelligen Rufnummer, wodurch Fehlermöglichkeiten gegeben sind und der Zeitaufwand bei der Bedienung relativ hoch ist.

Ein Aufsatz über einen intelligenten Anrufbeantworter mit dem Titel: "Diener am Telefon" ist abgedruckt in der Funkschau 21/1984 ab Seite 55. Die dort beschriebene Einrichtung dient ausschließlich dazu, ankommende Telefonanrufe automatisch zu beantworten. Es sind über den Betrieb eines normalen Anrufbeantworters hinausgehende Funktionen beschrieben, wobei angegeben ist, auf welche Weise ein automatischer Mensch-Maschine-Dialog stattfinden kann. Um einen solchen Dialog mit passenden Fragen und Antworten zusammenstellen zu können, versucht die sogenannte Maschine den Anrufer mit seinem Namen zu erkennen, wie dies am Ende der Seite 56 und am Anfang der Seite 57 beschrieben ist. Hierzu ist ein in der mittleren Spalte der Seite 57 näher bezeichnetes Spracherkennungssystem eingesetzt. Dieses Spracherkennungssystem wird jedoch ausschließlich angewendet, um einen Dialog bei ankommenden Gesprächsverbindungen zu steuern.

Weiterhin ist in diesem Aufsatz beschrieben, daß auch abgehende Gespräche über diesen "Diener am Telefon" geführt werden können. Hierzu ist ein berührungsempfindlicher Bildschirm vorgesehen, womit einzelne Ziffern oder auch ganze Rufnummern durch Antasten aktiviert werden können, um eine abgehende Verbindung aufzubauen. Es ist in diesem Aufsatz nicht beschrieben, daß ein Spracherkennungssystem auch beim Herstellen von abgehenden Verbindungen verwendet wird.

Die Aufgabe der Erfindung besteht darin, ein Verfahren anzugeben, womit in Kommunikations-Vermittlungsanlagen, insbesondere Fernsprechnebenstellenanlagen, ein Bestellsystem betrieben werden kann, wobei einfache Wähl- und Bedienungsvorgange stattfinden. Für den Benutzer soll eine Erleichterung und ein Zeitgewinn gegeben sein.

Zur Lösung dieser Aufgabe ist eine Merkmalskombination vorgesehen, wie sie im Patentanspruch 1 angegeben ist. Damit wird in vorteilhafter Weise erreicht, daß zur Aufgabe von verschiedenartigen Bestellungen nur eine einzige kurze Rufnummer oder Einzelziffer zu wählen ist, wobei der Aufbau einer Verbindung zu der eine Bestellung annehmenden Stelle zusammen mit der Spezifikation der Bestellung durch sprachliche Äußerungen geschieht. Der Zeitaufwand für den Aufbau einer Verbindung zum Bestellserver ist sehr gering, und der Benutzer muß nicht unmittelbar auf die Antwort der eine Bestellung annehmenden Stelle warten.

Ein Ausführungsbeispiel der Erfindung wird nachfolgend anhand einer Zeichnung näher erläutert.

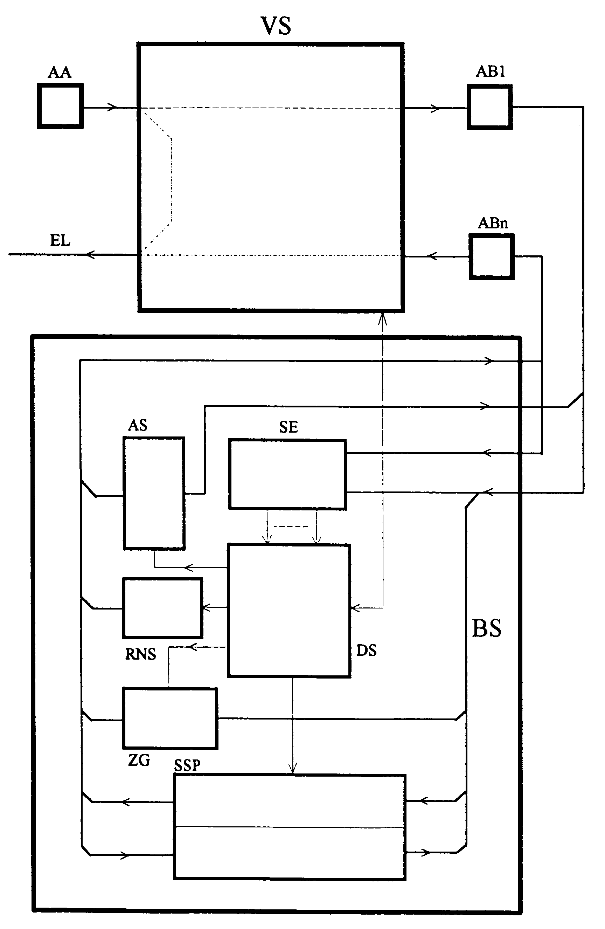

In der Zeichnung ist schematisch ein Vermittlungssystem VS dargestellt, woran mehrere Anschlußorgane AA und Externleitungen EL angeschlossen sind. Dieses Vermittlungssystem VS ist über mehrere weitere Anschlußorgane AB1 bis ABn mit einem Bestellserver BS verbunden. Der hier als separate Einrichtung dargestellte Bestellserver BS kann jedoch auch in das Vermittlungssystem VS integriert sein, so daß die besonderen Anschlußorgane AB1 bis ABn nicht vorhanden sein müssen.

Der Bestellserver BS besteht im wesentlichen aus einer Dialogsteuerung DS mit vorgeschaltetem Spracherkenner SE, einem Ansagespeicher AS, einem Rufnummernspeicher ANS und einem Sprachspeicher SSP. Zusätzlich kann noch ein Zeichengenerator ZG vorgesehen sein, wenn für mit Anzeigeeinrichtungen ausgestattete Endgeräte alphanumerisch darstellbare Informationen erzeugt und übertragen werden sollen. Die Funktionen der Komponenten des Bestellservers BS werden im folgenden bei der Beschreibung von praktischen Beispielen erklärt.

Es sei angenommen, daß von einem anrufenden Anschlußorgan AA aus die Bestellung für ein Taxi aufgegeben werden soll. Hierzu ist eine einprägsame Rufnummer oder auch nur eine einzige Ziffer zu wählen, womit der Bestellserver BS über ein ihm zugeordnetes Anschlußorgan, beispielsweise AB1, erreicht wird. Es können auch mehrere Anschlußorgane AB1 bis ABn vorgesehen sein, welche als Sammelanschluß betrieben werden können, so daß bei entsprechender Speicher- und Rechenkapazität des Bestellservers mehrere Bestellungen gleichzeitig bearbeitet werden können. Wenn innerhalb des Vermittlungssystems VS eine Verbindung zwischen dem anrufenden Anschlußorgan AA und dem Anschlußorgan AB1 des Bestellservers hergestellt worden ist, so wird der Anrufer mit einer im Ansagespeicher AS abgelegten Ansage aufgefordert, seine Bestellung aufzugeben. Dabei kann eine Art Bedienerführung vorgesehen sein, womit der Benutzer aufgefordert wird, dafür zu sorgen, daß die seine Bestellung eindeutig definierenden Worte in der sprachlichen Eingabe enthalten sind. Im Falle einer Taxibestellung muß also das Wort Taxi unbedingt in dem vom Benutzer abzugebenden Text enthalten sein.

Die vom anrufenden Anschlußorgan AA abgegebenen sprachlichen Äußerungen werden über das Vermittlungssystem VS hinweg zum Bestellserver BS übertragen und dort vom Spracherkenner SE empfangen. Der Spracherkenner SE arbeitet als Sprecherunabhängiges Spracherkennungssystem dergestalt, daß verschiedenen Reizworte, z. B. Taxi, Zimmer, Termin, Raum und andere als besonders relevant erkannt werden können.

Beim Erkennen eines dieser Reizworte, z. B. Taxi, durch den Spracherkenner SE wird dies der Dialogsteuerung DS mitgeteilt, welche daraufhin mit einem vorbestimmten Befehl den Rufnummernspeicher RNS ansteuert. Im Rufnummernspeicher RNS sind mehrere jeweils den Reizworten zugeordnete Rufnummern abgelegt. Dabei kann es sich sowohl um interne Rufnummern, beispielsweise Nebenstellenrufnummern, für das Vermittlungssystem VS selbst oder um Rufnummern handeln, mit denen eine Verbindung über eine Externleitung EL aufgebaut werden kann. Die Dialogsteuerung DS veranlaßt daraufhin mit Hilfe des Rufnummernspeichers RNS den Aufbau einer Verbindung zu einer die Bestellung annehmenden Stelle, wobei ein dem Bestellserver BS zugeordnetes Anschlußorgan, z. B. ABn belegt wird. Dabei verfolgt die Dialogsteuerung DS den jeweiligen Zustand der im Aufbau befindlichen Verbindung. Es kann also festgestellt werden, ob der erreichte Anschluß einer die Bestellung entgegennehmenden Stelle frei oder besetzt ist, und wann von dort eine Meldung erfolgt.

Wenn die eine Bestellung entgegennehmende Stelle antwortet, so wird im Anschluß daran von der Dialogsteuerung DS der Ansagespeicher AS angesteuert, um eine dort abgespeicherte vorbereitete Ansage abzusenden. Darin enthalten ist der Name und die Adresse der bestellenden Firma. Weitere die Bestellung betreffenden Angaben, die vorher vom anrufenden Anschlußorgan aus abgegeben wurden und im Sprachspeicher SSP zwischengespeichert sind, werden im Anschluß an die Ansage ebenfalls zu der die Bestellung entgegennehmenden Stelle übermittelt. Dabei kann mitgeteilt werden, zu welcher Zeit das bestellte Taxi an welchem Ort zu sein hat. Im Anschluß daran erfolgt eine weitere Ansage, womit die Bedienungsperson an der die Bestellung entgegennehmenden Stelle aufgefordert wird, den Eingang und die Ausführbarkeit der aufgenommenen Bestellung zu bestätigen. Innerhalb dieser Ansage wird darauf hingewiesen, daß in dem sprachlich abzugebenden Text bestimmte Schlüsselwörter enthalten sein müssen.

Der Spracherkenner SE, welcher an die abgehende Verbindung zu der eine Bestellung aufnehmenden Stelle angeschaltet ist, erkennt nun die in einer Antwort enthaltenen Schlüsselwörter und stellt daraufhin fest, ob eine Bestellung in Ordnung geht oder nicht. Entsprechende Meldungen werden vom Spracherkenner SE der Dialogsteuerung DS mitgeteilt. Daraufhin erhält der Benutzer am anrufenden Anschlußorgan AA aus dem Ansagespeicher AS eine entspechende Mitteilung, so daß eindeutig erkennbar ist, ob die Bestellung erfolgreich war oder nicht. Falls die Verbindung vom anrufenden Anschlußorgan AA aus vorher ausgelöst wurde, so wird ein erneuter Anruf durchgeführt, wobei eine Verbindung zwischen dem anrufenden Anschlußorgan AA und dem Bestellserver BS über das zugeordnete Anschlußorgan AB1 hergestellt wird.

Für den Fall, daß der Spracherkenner SE aus der Antwort, welche von einer die Bestellung entgegennehmenden Stelle übermittelt wird, keine eindeutig interpretierbare Schlüsselwörter erkennen kann, so wird der am anrufenden Anschlußorgan AA befindliche Benutzer darüber informiert. In diesem Fall wird automatisch eine direkte Verbindung, im Beispiel zwischen dem anrufenden Anschlußorgan AA und der Externleitung EL hergestellt. Bei einer derartigen Verbindung können möglicherweise vorhandene Unstimmigkeiten in direktem Dialog geklärt werden.

In ein derartiges Verfahren kann der im Bestellserver BS außerdem befindliche Zeichengenerator ZG mit einbezogen werden. Dies geschieht dann, wenn vom Vermittlungssystem VS erkannt wird, daß ein am anrufenden Anschlußorgan AA angeschlossenes Endgerät über eine Anzeigeeinrichtung verfügt, oder daß eine Zeichenübertragung über die Externleitung EL möglich ist und ein darüber angesteuertes Endgerät eine Anzeigeeinrichtung hat. Die im Zeichengenerator ZG erzeugten Informationen werden zum anrufenden Anschlußorgan AA übertragen und dienen dazu, den Benutzer über den Erfolg seiner Bestellung zu informieren. Eine derartige Zeichenübertragung wird in der Anzeigeeinrichtung des betreffenden Endgerätes sichtbar gemacht und kann auch zusätzlich zu einer sprachlichen Ansage erfolgen. Über die zu einer die Bestellung entgegennehmenden Stelle aufgebaute Verbindung können ebenfalls alphanumerisch darstellbare Zeichen übertragen werden, womit die Bestellung betreffende Daten in Kurzform, z. B. Taxi am (Datum) um (Uhrzeit) nach (Ortsangabe) mitgeteilt werden können. Auch diese Zeichenübermittlung kann zusätzlich zu einem Ansagetext erfolgen.

Der im Bestellserver BS befindliche Sprachspeicher SSP ist in zwei richtungsgebundene Bereiche aufgeteilt, worin die vom anrufenden Anschlußorgan AA bzw. die von der eine Bestellung annehmenden Stelle empfangenen sprachlichen Mitteilungen vorübergehend gespeichert werden. Für den Fall, daß bei der Annahme einer Bestellung Unklarheiten bestehen, kann von der eine Bestellung annehmenden Stelle durch ein besonderes Signal der Sprachspeicher SSP angesteuert werden und der zugehörige Inhalt, d. h. die vom anrufenden Anschlußorgan AA empfangene sprachliche Mitteilung abgehört werden. Dieses Signal kann entweder über einen vorhandenen Signalisierungskanal gegeben werden oder in Form eines tonfrequenten Wählzeichens über den Sprechweg übertragen werden. Mit einem derartigen Signal kann auch vom anrufenden Anschlußorgan AA die Dialogsteuerung DS veranlaßt werden, den Sprachspeicher SSP anzusteuern, wenn bei der Quittierung einer Bestellung Unklarheiten bestehen. In diesem Fall kann der Benutzer, der die Bestellung aufgegeben hat, die sprachlich abgegebene Antwort von der eine Bestellung annehmenden Stelle abhören. Der Sprachspeicher SSP dient also zur zusätzlichen gegenseitigen Klarstellung von eine Bestellung betreffenden Kriterien. Die jeweiligen Bereiche innerhalb des Sprachspeichers SSP werden zum Überschreiben freigegeben, wenn die betreffende Information nicht mehr benötigt wird. Dem Sprachspeicher SSP ist ein für jede Richtung vorgesehener, nicht dargestellter Sprachcoder vorgeschaltet. Dieser Sprachcoder kann so beschaffen sein, daß mit einer relativ geringen vorzusehenden Speicherkapazität genügend sprachliche Mitteilungen vorübergehend aufgenommen werden können. Die Ansteuerung des Sprachspeichers SSP kann auch durch Abgabe eines sprachlichen Befehls von der anrufenden Stelle AA aus oder von der eine Bestellung annehmenden Stelle aus abgegeben werden. Dieser Befehl, z. B. das Wort "abhören", wird dann vom Spracherkenner empfangen und erkannt, wobei der Dialogsteuerung DS der Befehl zum Ansteuern des Sprachspeichers SSP gegeben wird.

Anstelle eines Spracherkenners SE kann auch ein Wahlziffernerkenner, z. B. ein MFV-Empfänger vorgesehen sein. Vom anrufenden Anschlußorgan AA aus kann dann die Art der Bestellung mit einer Wähltastatur und den davon erzeugten tonfrequenten Wahlinformationen gesteuert werden. Es ist dann für jede Art von Bestellung eine Kennzahl oder Kennziffer vorzusehen, die im Anschluß an den Aufbau einer Verbindung zum Bestellserver BS nachzuwählen ist.

Außerdem kann von der Dialogsteuerung eine Identifizierung des anrufenden Anschlußorgans AA veranlaßt werden, wodurch im Ansagespeicher AS gespeicherte Ansagetexte ergänzt werden können. Damit kann zu einer die Bestellung annehmenden Stelle eine genauere Angabe über den Auftraggeber übermittelt werden. Es kann sich beispielsweise um die Mitteilung der Rufnummer des Auftraggebers handeln, die für den Fall eines Rückrufes bei Unklarheiten zu wählen wäre.

Wie eingangs bereits erwähnt worden ist, können vom Bestellserver BS prinzipiell verschiedenartige Bestellungen bearbeitet werden. Wenn beispielsweise das Wort "Taxi" innerhalb des vom Auftraggeber gesprochenen Textes vom Spracherkenner SE erkannt wird, so wird von der Dialogsteuerung DS der Rufnummernspeicher RNS so angesteuert, daß die Rufnummer der örtlichen Taxizentrale ausgegeben wird. Beim Erkennen des Wortes "Zimmer" wird dementsprechend die Rufnummer eines Hotels aus dem Rufnummernspeicher RNS ausgelesen. Bei einer Zimmerbestellung kann auch eine Verknüpfung mit dem Namen einer Stadt durchgeführt werden, so daß die Rufnummer eines Hotels mit der entsprechenden Ortsnetzkennzahl im Rufnummernspeicher RNS angesteuert wird. Auf ähnliche Weise könnte die Bestellung von Fahrkarten und Eintrittskarten vorgenommen werden.

Bei den bisher beschriebenen Beispielen wurde davon ausgegangen, daß jeweils eine Verbindung über eine Externleitung EL aufgebaut wird. Über den Bestellserver können jedoch ohne weiteres auch Dienste abgewickelt werden, die sich innerhalb des Vermittlungssystems VS durchführen lassen. Dabei kann es sich beispielsweise um Raumreservierungen oder Termine für eine Konferenz handeln. Da die eine derartige Bestellung entgegennehmende Stelle sich dann sozusagen innerhalb des Hauses befindet, enthält der Rufnummernspeicher RNS an der betreffenden Stelle die Rufnummer für eine Internverbindung. Wenn also vom Spracherkenner SE beispielsweise die Worte "Raum" oder "Termin" erkannt werden, so wird eine Internverbindung zu einer Nebenstelle aufgebaut. Dabei sind selbstverständlich alle Funktionen wirksam, wie sie zuvor am Beispiel einer Externverbindung beschrieben worden sind.

Der Bestellserver BS bietet für einen Benutzer den Vorteil, daß nicht unmittelbar auf die Antwort auf eine Bestellung gewartet werden muß. Auch wenn die eine Bestellung annehmende Stelle besetzt ist, kann der Benutzer den Auftrag dem Bestellserver BS überlassen, wobei in diesem Fall Wahlwiederholungen durchgeführt werden. Es kann auch vorgesehen sein, daß sich im Rufnummernspeicher RNS Ersatzrufnummern befinden, die dann ausgesendet werden, wenn die Verbindung zu einer die Bestellung annehmenden Stelle mit der zuvor ausgesendeten Rufnummer nicht zustandegekommen ist. So könnte beispielsweise anstelle der Taxizentrale ein Mietwagenunternehmen angerufen werden oder im Falle einer Zimmerbestellung ein anderes Hotel angewählt werden. Der Benutzer kann jederzeit eine Verbindung zum Bestellserver BS aufbauen, um sich über den Status seiner Bestellung zu informieren. Es besteht auch die Möglichkeit, daß die nicht mehr für eine Bestellung benötigten Informationen im Sprachspeicher SSP gelöscht werden. Es ist außerdem denkbar, daß der Bestellserver BS nicht nur für Dienstleistungen, sondern auch für das Bestellen von Waren angewendet wird.

## Patentansprüche

1. Verfahren zum Betreiben eines automatischen Bestellsystems in Kommunikations-Vermittlungsanlagen, wobei durch einen einfachen Wahlvorgang vorprogrammierte Verbindungen aufgebaut werden und automatische Ansager, erfolgen, womit eine Bestellung eindeutig charakterisiert wird,
**dadurch gekennzeichnet**,
daß innerhalb eines Vermittlungssystems (VS) ein Bestellserver (BS) vorgesehen ist, zu dem eine Internverbindung aufgebaut wird,
daß an diese Verbindung ein Spracherkenner (SE) angeschaltet wird, der aus den von einem Benutzer über ein anrufendes Anschlußorgan (AA) abgegebenen Sprachäußerungen einzelne Schlüsselwörter erkennt und daraufhin eine im Bestellserver (BS) befindliche Dialogsteuerung (DS) anreizt,
daß die Dialogsteuerung (DS) daraufhin einen Rufnummernspeicher (RNS) ansteuert, wobei eine dem erkannten Schlüsselwort entsprechende Rufnummer ausgelesen wird, die zum Aufbauen einer Verbindung zu einer die Bestellung annehmenden Stelle dient,
daß nach dem Zustandekommen dieser Verbindung von der Dialogsteuerung (DS) ein Ansagespeicher (AS) angesteuert wird,
wobei eine dem erkannten Schlüsselwort entsprechende Ansage ausgelesen und zur angerufenen Stelle übertragen wird,
und daß der an diese Verbindung angeschaltete Spracherkenner (SE) durch das Erkennen einzelner Schlüsselwörter aus der von der angerufenen Stelle kommenden Antwort feststellt, ob die Bestellung bestätigt worden ist, woraufhin eine entsprechende Sprachansage aus dem Ansagespeicher (AS) ausgelesen und zum anrufenden Anschlußorgan (AA) übertragen wird.

2. Verfahren nach Anspruch 1,
**dadurch gekennzeichnet**,
daß ein Sprachspeicher (SSP) vorgesehen ist, der die vom anrufenden Anschlußorgan (AA) kommenden Informationen vorübergehend aufnimmt und daß wichtige Einzelheiten, z. B. Datums- und Zeitangaben, daraus in die einer die Bestellung annehmenden Stelle zu übertragende Ansage integriert werden.

3. Verfahren nach Anspruch 1,
**dadurch gekennzeichnet**,
daß aus der Antwort der die Bestellung annehmenden Stelle eine Ansage mit Hilfe des Ansagespeichers (AS) generiert wird, die zum anrufenden Anschlußorgan (AA) übertragen wird.

4. Verfahren nach Anspruch 1,
**dadurch gekennzeichnet**,
daß ein Zeichengenerator (ZG) vorgesehen ist, womit über einen Signalisierungskanal übertragbare, für eine Anzeige geeignete Informationen erzeugt werden können.

5. Verfahren nach Anspruch 1,
**dadurch gekennzeichnet**,
daß mit Hilfe des Zeichengenerators (ZG) aus der Antwort der die Bestellung annehmenden Stelle von der Dialogsteuerung (DS) eine digitale Information erzeugt wird die zum anrufenden Anschlußorgan (AA) übertragen wird und dort in einer Anzeigeeinrichtung erscheint.

6. Verfahren nach Anspruch 1,
**dadurch gekennzeichnet,**
daß der Sprachspeicher (SSP) die Antwort der die Bestellung annehmenden Stelle vorübergehend aufnimmt, und daß diese zum anrufenden Anschlußorgan (AA) übertragen wird, wenn die Bestellung nicht eindeutig oder nicht vorbehaltlos quittiert wurde.

7. Verfahren nach Anspruch 1,
**dadurch gekennzeichnet**,
daß die Dialogsteuerung (DS) automatisch eine Verbindung zwischen dem anrufenden Anschlußorgan (AA) und einer die Bestellung entgegennehmenden Stelle herstellt, wenn sich aufgrund erkannter Schlüsselwörter herausstellt, daß eine Bestellung nicht automatisch aufgenommen werden kann.

8. Verfahren nach Anspruch 1,
**dadurch gekennzeichnet**,
daß eine Wahlwiederholung stattfindet, wenn die eine Bestellung annehmende Stelle besetzt ist, indem der Rufnummernspeicher (RNS) erneut ausgelesen wird.

9. Verfahren nach Anspruch 1,
**dadurch gekennzeichnet**,
daß anstelle eines Spracherkenners (SE) ein Wahlziffernerkenner, z.B. ein MFV-Empfänger vorgesehen ist, der an einer vom anrufenden Anschlußorgan (AA) kommenden Wahlinformation erkennt, welche Art von Bestellung aufgegeben werden soll und welche Verbindung daraufhin aufzubauen ist.

10. Verfahren nach Anspruch 1,
**dadurch gekennzeichnet**,
daß von der eine Bestellung annehmenden Stelle aus durch Eingabe eines sprachlichen Befehls oder durch einen Tastendruck das Abhören von im Sprachspeicher (SSP) befindlichen Informationen bewirkt werden kann.

11. Verfahren nach Anspruch 1,
**dadurch gekennzeichnet**,
daß von der Dialogsteuerung (DS) eine Identifizierung des anrufenden Anschlußorgans (AA) veranlaßt wird,
und daß der eine Bestellung annehmenden Stelle eine Mitteilung über die Stelle, von wo aus die Bestellung ausging, übertragen wird.

12. Verfahren nach Anspruch 1,
**dadurch gekennzeichnet**,
daß dem Sprachspeicher (SSP) ein Coder zur Bitratenreduzierung vorgeschaltet ist, um eine Komprimierung der gespeicherten Sprachinformation zu erreichen.

13. Verfahren nach Anspruch 1,
**dadurch gekennzeichnet**,
daß der Bestellserver (BS) über mehrere Anschlußorgane (AB1 bis Abn) verfügt, über die er mit dem Vermittlungssystem (VS) verbunden ist.

14. Verfahren nach Anspruch 1,
**dadurch gekennzeichnet**,
daß der Bestellserver (BS) in das Vermittlungssystem (VS) integriert ist.
